# EUROPEAN PATENT APPLICATION

(11) **EP 2 365 384 A1**
(43) Date of publication of application: **14.09.2011**
(21) Application number: 11156643.6
(22) Date of filing: 02.03.2011
(51) Int. Cl.: G02F 1/13357

(54) **A backlight unit for a liquid crystal display and a method of making the same**

(30) Priority: 09.03.2010 TR 201001777
(71) Applicant: Vestel Elektronik Sanayi ve Ticaret A.S., 45030 Manisa (TR)
(72) Inventor: Karsli, Kivanc, 45030 Manisa (TR); Gucbilmez, Alp, 45030 Manisa (TR)
(74) Representative: Cayli, Hülya

(57) **Abstract**

The invention provides a backlight unit and a method of making a backlight unit for a liquid crystal display (LCD). The backlight unit comprises: an optical source (22); a diffuser layer (24); a fluorescent layer (26) arranged to fluoresce in response to stimulating radiation received from the diffuser layer or in response to stimulating radiation received from the optical source, wherein the thickness of the fluorescent layer varies across its surface so as to counteract defects in the uniformity of light received from the optical source. An LCD display device is also provided incorporating such a backlight unit.

## Description

### Technical Field

The present invention relates to a backlight unit for a Liquid Crystal Display (LCD) and a method of making a backlight unit for an LCD.

### Prior Art

In a Liquid Crystal Display (LCD) or "LCD panel", an LCD system including one or more layers of LCD crystals or molecules and polarisers etc is provided in combination with a light source such as a backlight unit. A backlight unit is typically provided at a rear side thereof. The backlight unit emits light, and the light is uniformly spread to the front side via the backlight unit and an arrangement of prisms and possibly other optical components too. As mentioned, liquid crystal molecules are provided in a layer and image signals are applied to them to determine whether or not the light is able to pass through. Thus, by selectively controlling the liquid crystal molecules, it is possible to cause the LCD panel to display desired images.

Backlight units illuminate the LCD from the side or back of the display panel. Backlight units are typically used in small displays to increase readability in low light conditions, and in computer displays and LCD televisions to produce light in a manner similar to a CRT display.

As liquid crystal itself does not emit light, a sufficiently bright and uniformly distributed light source is required to enable the LCD panel to present desired images. Such a light source is typically provided by the backlight unit. Thus, a backlight unit is an important part of an LCD panel. In currently available backlight units, generally a diffuser plate is used to diffuse the light emitted by the source. The white light emitted is diffused to obtain a uniform white lighting, or the light from RGB/GRGB Light Emitting Diodes or other suitable light emitting sources, is diffused to obtain white light.

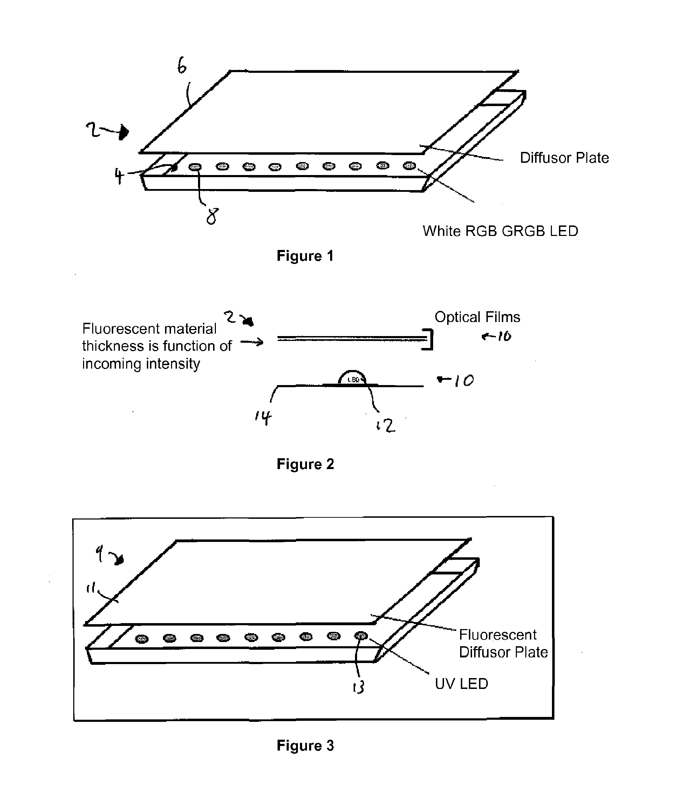

Figure 1 shows a schematic representation of a conventional backlight unit. The backlight unit (2) comprises a light source (4) and a diffuser plate (6). The light source (4) includes plural individual light source components (8) which might be CCFL (cold cathode fluorescent lights) /External Electrode Fluorescent Lamp (EEFL)/LED/OLED. CCFL backlights are typically used on large displays like computer monitors or television displays and are usually white in color. The light obtained from the CCFL/EEFL/LED source, is diffused by the diffuser plate (6) to obtain uniformity and/or colour mixture. The uniformity obtained thus is in the proximity of 70 %. Also, at best, the transmittance ratio of a diffuser plate is about 60-70%. In other words, between 30 and 40% of the light generated by the source (4) is not transmitted to the LCD system (not shown) that would typically be provided on top of the backlight unit (2). Thus, two problems can be seen to exist, which are a lack of uniformity in the distribution of light intensity across the surface of the backlight unit and also the high absorbance of the diffuser layer.

Conventionally, diffusion is performed or achieved by optical films with certain haze, transmission and diffusion parameters. An example of an optical film that can be used is a diffuser plate. These typically have relatively low transmission rates. In addition, known diffuser plates cause some difficulties in cases where there are fewer optical source components. One such problem that is caused is the "Mura effect". The Mura effect is the discontinuity of luminance and/or colour on the LCD/BLU. It can be seen in dark areas as well as white areas. The Mura effect is known to affect LCD panels and involves clouding and uneven patches of changes in luminance being visible on the displayed image. Typically, such defects are most visible in dark or black areas of displayed scenes.

One way that this Mura effect problem has been addressed in the prior art is by printing a pattern on the surface of the light source or the diffusion plate. This is a complex process and still does not address the issue of absorption within the diffuser layer, i.e. it is still fundamentally inefficient due to the transmittance ratio of known diffuser plates being about 60-70%.

Furthermore, to coat the inner surface of a CCFL at 60 or 40 torr is technically complex. The coating uniformity, and hence the optical uniformity, is difficult to control and achieve at a sufficient level of accuracy.

LCD panels are used widely television displays, monitors, notebooks computers, digital cameras, projectors, etc., US-A-2006/0279674 discloses a display module using blue-ray or ultraviolet-ray light sources to excite RGB fluorescent powders to emit light. The display module includes a light guide plate, at least one blue-ray or ultraviolet-ray light source, a diffuser plate, a liquid crystal layer and a fluorescent-powder excited layer. The light guide plate serves to guide light to the diffuser plate. The diffuser plate will further diffuse the light, which then passes through the liquid crystal layer and reach the fluorescent-powder excited layer where the light excites the fluorescent powder to emit light.

US-A-2007/0249176 discloses a method of fabricating an active device array substrate. A substrate having scan lines, data lines and active devices formed thereon is provided. Each of the active devices is electrically connected to the corresponding scan line and data line. An organic material layer is formed over the substrate to cover the scan lines, the data lines and the active devices. Then, a plasma treatment is performed to the surface of the organic material layer to form a number of concave patterns. The dimension of each of the concave patterns is smaller than one micrometer.

US-A-5,594,560 discloses a display device including a display panel, such as a liquid crystal panel, in combination with a reflective holographic optical element that redirects ambient light for illuminating the display. The light redirected by the holographic element is limited to a predetermined spectral band. A fluorescent film is included for absorbing light outside the spectral band of the holographic element and re-emitting light within the spectral band to increase the light redirected by the holographic element and thus increase the apparent brightness of the display.

### Brief Description of the Invention

According to a first aspect of the present invention, there is provided a backlight unit for a liquid crystal display LCD, the backlight unit comprising: an optical source; a diffuser layer; a fluorescent layer arranged to fluoresce in response to stimulating radiation received from the diffuser layer or in response to radiation received from the optical source, wherein the thickness or density of the fluorescent layer varies across its surface so as to counteract defects in the uniformity of light received from the optical source.

In an embodiment, a backlight unit is provided for use with an LCD system, in which in the backlight unit, the diffuser plate is coated with a fluorescent material. A monochrome UV source, in preferred embodiments, may be used to excite the fluorescent coating on the diffuser plate.

Preferably, the optical source comprises optical source components and a reflector to direct light from the optical source components to the diffuser layer.

Preferably, the optical source components comprise one or more of LED's, cold cathode lamps or any other suitable light source.

Preferably, the variation in thickness or density of the fluorescent layer comprises local concentrations of fluorescent material in locations corresponding to the location of the optical source components. Thus, in embodiment, the invention provides a system by which the Mura effect and other variations in light intensity and distribution etc across a backlight unit can easily and conveniently be addressed. By patterning the thickness or density of the fluorescent layer in such a way as to correspond to the location of the optical source components, the Mura effect and other variations in light intensity and distribution etc across a backlight unit can easily and conveniently be addressed.

Preferably, the backlight unit comprises a wavelength dependent reflector provided between the optical source and the diffuser layer, the reflector serving to reflect light of certain frequencies from reaching the diffuser whilst allowing light of other wavelengths through.

Preferably, the reflector is arranged to allow the transmission of Ultra-violet light but reflection of visible light. Thus, visible light is stopped from entering the diffuser layer whereas UV radiation is able to reach the diffuser layer and move onwards to the fluorescent layer.

Preferably, the fluorescent layer is provided as a coating on one or both surfaces of the diffuser layer.

Preferably, the fluorescent layer is provided as a coating on the underside of the diffuser layer and in which the fluorescent layer is selected so as to reflect visible light back to the light source and only allow transmission to the diffuser layer of light having a wavelength within a certain wavelength range. Thus, in this particular embodiment an additional reflector layer can be dispensed with since the desired reflectivity is provided by the fluorescent layer.

According to a second aspect of the present invention, there is provided a liquid crystal display device, comprising a backlight unit according to the first aspect of the present invention.

According to a third aspect of the present invention, there is provided a method of making a backlight unit for a liquid crystal display device, the method comprising: providing an optical source; providing a diffuser layer; and forming a fluorescent layer in proximity to the diffuser layer in which the fluorescent layer is formed to have a non-uniform thickness and/or density.

In a preferred embodiment, the thickness and/or density of the fluorescent layer is varied in dependence on the distribution of light intensity as provided by the light source. Typically, the light source might comprises individual light source components such as one or more of cold cathode fluorescent lights, External Electrode Fluorescent Lamps and LED's and the variation in thickness or density of the fluorescent layer corresponds to the locations of the individual light source components.

### Object of the Invention

The object of the invention is to provide a backlight unit for Liquid Crystal Displays comprising; an optical source; a diffuser layer; a fluorescent layer arranged to fluoresce in response to stimulating radiation received from the diffuser layer or in response to radiation received from the optical source, wherein the thickness or density of the fluorescent layer varies across its surface so as to counteract defects in the uniformity of light received from the optical source.

Another object of the invention is to provide a Liquid Crystal Display equipped with described backlight.

Another object of the invention is to provide a novel method to make a backlight for Liquid Crystal Displays.

### Brief Description of the Drawings

Embodiments of the present invention will now be described in detail with reference to the accompanying drawings, in which:
Figure 1 is a schematic representation of a known backlight unit;
Figure 2 is a schematic representation of part of a backlight unit according to an embodiment of the present invention;
Figure 3 is a schematic representation of a backlight unit according to an embodiment of the present invention;
Figure 4 is a schematic representation of a section through a backlight unit according to an embodiment of the present invention; and,
Figure 5 is a schematic representation of an LCD display panel including a backlight unit.

### Detailed Description of the Invention

Figure 2 is a schematic representation of part of a backlight unit (2) according to an embodiment of the present invention. The part shown includes an optical source (10), itself comprising optical source components (12) and a reflector (14) to direct light from the optical source components to the diffuser layer not shown. One or more optical films (16) are provided on one or more of the surfaces of the diffuser layer. As will be explained below, the optical films comprise a fluorescent layer arranged to fluoresce in response to stimulating radiation received from the diffuser layer or from the optical source and thus to generate the visible light needed to operate the backlight unit. Herein, the term "fluoresce" or any derivative thereof is used to mean any material capable of the emission of visible light after having absorbed light of a different wavelength.

Figure 3 is a schematic representation of a backlight unit according to an embodiment of the present invention. The backlight unit (9) includes a fluorescent diffuser plate (11) which might typically be a conventional diffuser plate coated on one or both sides with a fluorescent layer as will be described in greater detail below. A number of optical light source components (13) are provided which are provided to generate radiation at wavelength (or frequency) sufficient to excite the fluorescent diffuser plate (11) so as to generate light.

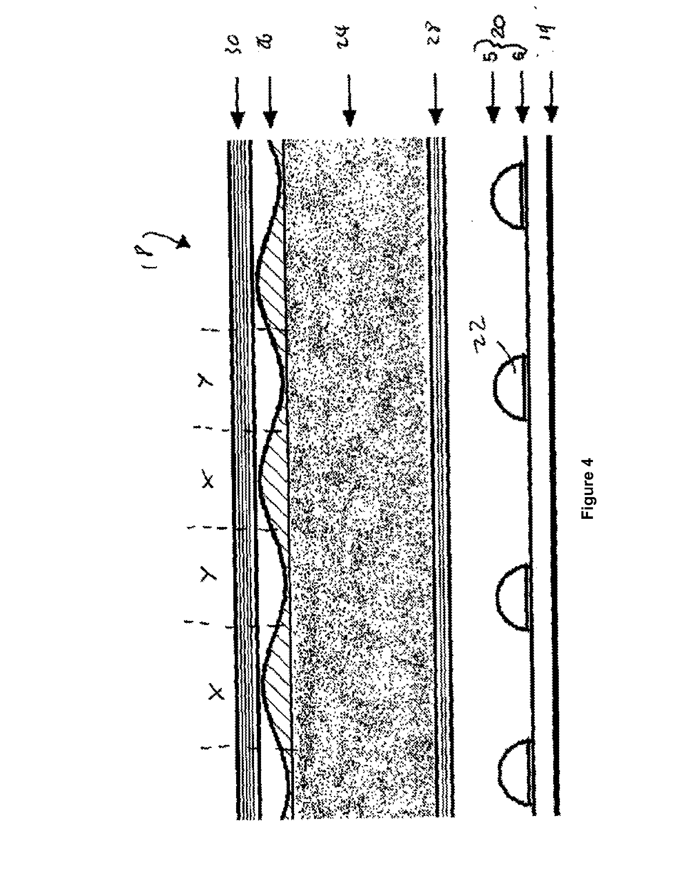

Figure 4 is a schematic representation of a section through a backlight unit according to an embodiment of the present invention. The backlight unit (18) comprises a back cover (19) which may be a rigid substrate on which the device is formed. An optical source (20) in this case includes both a reflective backing layer (6) and plural optical source components (22). The optical source components (22) may be any suitable form of optical source component, examples including LED's and Cold Cathode Lamps, amongst others. The reflective backing layer (6) serves to reflect photons emitted from the source components (22) with velocity towards the back cover of the device back in the direction of the diffuser layer (24), described in greater detail below.

As mentioned above, a diffuser layer (24) is provided. This provides means to diffuse photons emitted from the light source components (22). A fluorescent coating (26) is provided, in this example, on the opposite side of the diffuser layer (24) from the optical source. The fluorescent coat may be a fluorophore coat and the layer is excited by photons emitted by the source and received through the diffuser layer (24). The thickness (or density) distribution of the fluorescent layer (26) is controlled in dependence on the expected photon intensity to which it is subject. In other words, the thickness and/or density of the fluorescent layer vary across the area of the backlight unit to counteract defects in the uniformity of light received from the optical source. The light that the fluorescent layer then emits can therefore be easily controlled. Thus, a relatively simple means is provided for ensuring uniformity of optical intensity distribution across the surface of the backlight unit.

As can be seen in Figure 4, the variation of the thickness of the fluorescent coating (26) corresponds to the location of the optical source components (22). In other words, there is a larger amount of fluorescent material in regions (X) which are not directly above an individual optical source component, as compared to the regions (Y) which are. This means that it is relatively straightforward to ensure a required distribution and/or uniformity of light intensity that is given out by the device as a whole.

In the example shown in Figure 4, the thickness of the fluorescent layer (26) is varied in accordance with the positioning of the optical source components (22). However, it could be that the density of the fluorescent material is varied instead of the thickness such that the layer would be physically uniform in thickness but there would still be a higher degree of fluorescent activity in the areas that are a greater distance from an optical source component as compared to those that are closer.

Referring again to the example of Figure 4, an additional component (28) is provided which is a reflective layer. The reflective layer (28) serves the purpose of obstructing visible light generated by the fluorescent layer (26) while allowing UV or other such radiation from the optical source components (22) to pass through to the fluorescent layer (26). In other words, the reflective layer (28) ensures that substantially all visible light generated by the fluorescent layer (26) is emitted by the device for use in the associated LCD. In addition, so as to ensure that the backlight unit (18) does not give off UV radiation, a UV filter (30) is preferably provided, as an uppermost layer in this example. The UV filter (30) serves to filter UV radiation so as to stop UV radiation passing out of the device whilst allowing visible light generated by the fluorescent layer to pass through it.

In an alternative embodiment (not shown) instead of providing the fluorescent coating on the outer layer of the diffuser layer, i.e. on the side of the diffuser layer most distant from the optical source components (22), the fluorescent layer (26) may be provided on the inner side of the diffuser layer (24). In this example, the fluorescent layer (26) receives the radiation from the optical source components (22) and generated visible light is transmitted to the diffuser layer (24) for diffusion and onward transmission through the LCD device to which the backlight unit might typically be connected. In another embodiment, the fluorescent layer (26) or material may be provided distributed within the volume of the diffuser plate. In other words, the fluorescent layer is provided integrated with the diffuser layer.

The materials used for the various components within the backlight unit are those that the skilled person would readily appreciate can be used for such functions. As specific examples, Silicates or nitrates may be used as the materials.

It will be appreciated, that the significant departure from conventional systems, as disclosed herein, is that instead of using a diffuser plate simply to diffuse light emitted by a source, in the present system, a diffuser plate is coated with a fluorescent material and then a radiation source, such as a monochrome UV source, is used to excite the fluorescent coating on the diffuser plate.

In the present system, optical films are coated with a fluorescent material to simplify the process of manufacture and increase the efficiency by using an optical source such as a UV source to illuminate the components coated.

To make a device as shown in Figure 4, the layers can be formed in known manners. In one specific non-limiting example, once the diffuser layer (24) has been formed on the surface and presents an outer surface of the device, the fluorescent layer (26) can easily be applied. The fluorophore is mixed with liquid PET polyethylene terephthalate which is then be coated on a conventional diffuser plate such as a solid PET layer and cured with heat and/or UV radiation. There is no complicated process required to provide the required variation in thickness or density of the fluorescent layer (26). Indeed, to coat a diffuser plate with a fluorescent layer of varying thickness is a relatively straightforward process. In contrast, to coat the inner surface of a CCFL at 60 or 40 torr is harder to achieve than to coat a surface of a diffuser plate. The coating uniformity and hence the optical uniformity and other performance parameters can therefore be improved in the present system as compared to known backplane units.

In addition, in the embodiment in which the lower surface of the diffuser plate is coated, i.e. between the optical source components and the diffuser layer, reflection of the visible light from the lower surface can be achieved whereas the UV radiation will be transmitted. Thus, the energy loss can be minimised. In this case, the upper surface of the diffuser plate is coated with a reflective layer to reflect the UV back down but to allow visible light to pass. Thus, any excess UV is recycled so that energy loss is minimized.

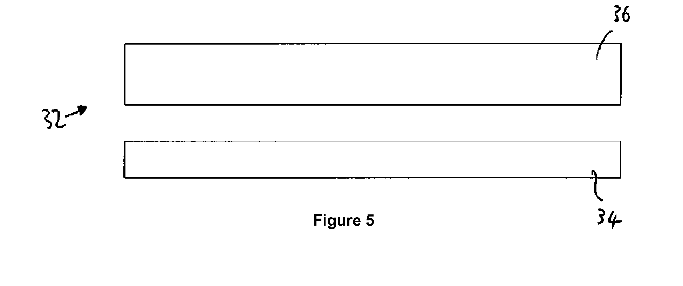

Figure 5 is a simplified schematic representation of an LCD panel including a backlight unit. The LCD panel (32) includes a backlight unit (34) and an LCD device (36). The LCD device may be any known LCD device and so it is not necessary to include description here of such a device. The usual features that would be provided in an LCD device will be included in the device (36) shown in Figure 5. The backlight unit (34) is a unit such as that shown in and described with reference to any of Figures 2 to 4. The LCD panel (32) may form part of any display device which requires an LCD panel, such as computer monitors, LCD televisions, and small displays that might be provided in other systems such as mobile telephones, DVD recorders, MP3 players etc.

Embodiments of the present invention have been described with particular reference to the examples illustrated. However, it will be appreciated that variations and modifications may be made to the examples described within the scope of the present invention.

## Claims

1. A backlight unit for a liquid crystal display (LCD), the backlight unit comprising;
- an optical source;
- a diffuser layer;
- a fluorescent layer arranged to fluoresce in response to stimulating radiation received from the diffuser layer or in response to stimulating radiation received from the optical source, wherein the thickness and/or density of the fluorescent layer varies across the area of the backlight unit to counteract defects in the uniformity of light received from the optical source.

2. A backlight unit according to claim 1, in which the optical source comprises optical source components and a reflector to direct light from the optical source components to the diffuser layer.

3. A backlight unit according to claim 2, in which the optical source components comprise one or more of cold cathode fluorescent lights, External Electrode Fluorescent Lamps and LED's.

4. A backlight unit according to claim 3, in which the variation in thickness of the fluorescent layer comprises local concentrations of fluorescent material in locations corresponding to the location of the optical source components.

5. A backlight unit according to any of claims 1 to 4, comprising a wavelength dependent reflector provided between the optical source and the diffuser layer, the reflector serving to reflect light of certain frequencies from reaching the diffuser whilst allowing light of other wavelengths through.

6. A backlight unit according to claim 5, in which the reflector is arranged to allow the transmission of Ultra-violet light but reflection of visible light.

7. A backlight unit according to any of claims 1 to 6, in which the fluorescent layer is provided as a coating on one or both surfaces of the diffuser layer.

8. A backlight unit according to claim 7 in which the fluorescent layer is provided as a coating on the underside of the diffuser layer and in which the fluorescent layer is selected so as to reflect visible light back to the light source and only allow transmission to the diffuser layer of light having a wavelength within a certain wavelength range.

9. A backlight unit according to any of claims 1 to 6, in which the fluorescent layer is provided as integrated with the diffuser layer.

10. A liquid crystal display device, comprising;
- a backlight unit according to any of claims 1 to 9.

11. A method of making a backlight unit for a liquid crystal display device, the method comprising;
- providing an optical source;
- providing a diffuser layer;
- forming a fluorescent layer associated with the diffuser layer in which the fluorescent layer is formed to have a non-uniform thickness and/or density.

12. A method according to claim 11, in which the thickness and/or density of the fluorescent layer is varied in dependence on the distribution of light intensity as provided by the light source.
